# EUROPÄISCHE PATENTSCHRIFT

(11) **EP 3 083 851 B1**
(45) Veröffentlichungstag und Bekanntmachung des Hinweises auf die Patenterteilung: **28.08.2019**
(21) Anmeldenummer: 14799484.2
(22) Anmeldetag: 19.11.2014
(51) Int. Cl.: C09D 17/00, C08F 283/00, C08F 290/06, C08F 290/14, C08G 18/08, C09D 7/65, C09D 175/06

(54) **PIGMENTPASTEN ENTHALTEND EINE WÄSSRIGE DISPERSION EINES MISCHPOLYMERISATS**
PIGMENT PASTES CONTAINING AN AQUEOUS DISPERSION OF A MIXED POLYMERISATE
PÂTES PIGMENTÉES CONTANT UNE DISPERSION AQUEUSE D'UN COPOLYMÈRE

(30) Priorität: 18.12.2013 EP 13197970
(43) Veröffentlichungstag der Anmeldung: 26.10.2016
(73) Patentinhaber: BASF Coatings GmbH, 48165 Münster (DE)
(72) Erfinder: STEINMETZ, Bernhard, 97535 Rütschenhausen (DE); LUHMANN, Nadia, 97753 Karlstadt-Stetten (DE); JANKOWSKI, Peggy, 97261 Güntersleben (DE); MATURA, Michael, 97318 Kitzingen (DE); REUTER, Hardy, 48167 Münster (DE); SCHWARTE, Stephan, 48282 Emsdetten (DE)
(74) Vertreter: BASF IP Association
(86) Internationale Anmeldenummer: PCT/EP2014/074964
(87) Internationale Veröffentlichungsnummer: WO 2015/090811

(56) Entgegenhaltungen:
- EP-A1- 3 022 242
- WO-A1-2012/084668
- WO-A2-00/63266
- US-A- 3 705 164

## Beschreibung

Die vorliegende Erfindung betrifft Pigmentpasten enthaltend eine wässrige Dispersion eines Mischpolymerisats. Die Pigmentpasten können insbesondere zur Herstellung von Beschichtungsmitteln, insbesondere wässrigen Basislacken, im Bereich der Automobilindustrie zum Einsatz kommen.

### Stand der Technik

Pigmentpasten und darin eingesetzte Polymerisate sind bekannt. Pigmentpasten sind Zubereitungen von Pigmentmischungen in Trägermaterialien, nämlich unterschiedlichen Polymerisaten, in denen die Pigmente in einer höheren Konzentration vorliegen als es der späteren Anwendung entspricht. Die spätere Anwendung liegt in der Regel in der Herstellung von Beschichtungsmitteln. Insbesondere ist in solchen Pigmentpasten regelmäßig das Gewichtsverhältnis von Pigmenten zu Polymerisaten größer als in Beschichtungsmitteln, in denen die Paste eingesetzt wird. Neben den Trägermaterialien (unterschiedliche Polymerisate, auch Pastenbindemittel genannt) sind in der Regel auch Wasser und/oder organische Lösemittel vorhanden. Auch unterschiedliche Additive wie Netzmittel sind einsetzbar.

Durch den Einsatz von Pigmentpasten wird in der Lackindustrie der technisch aufwendige Prozess der Pigmentdispergierung wesentlich erleichtert. Beispielsweise wird eine staubfreie Verarbeitung von Pigmenten während der Formulierung von Lacken gewährleistet. Zudem sind die Pigmente in der Paste optimal benetzt und sehr gut dispergiert, sodass auch im Lack ein verbesserter Verteilungszustand erreicht wird. Daraus resultieren selbstverständlich verbesserte anwendungstechnologische Eigenschaften des Lacks und der daraus hergestellten Lackierung, beispielsweise eine besonders homogene Farbe beziehungsweise Farbverteilung der Lackierung.

Bei der Herstellung dieser Pasten müssen allerdings genau abgestimmte Polymerisate (Pastenbindemittel) eingesetzt werden, um eine optimal konditionierte Paste zu erhalten. Ohne die individuelle Anpassung und genaue Auswahl des Polymerisats kann das jeweilige Pigment meist nicht optimal dispergiert werden, sodass damit auch die anwendungstechnologischen Eigenschaften der letztlich resultierenden Lackierung nicht optimal sind.

Problematisch ist dabei, dass das entsprechende Pastenbindemittel oft nicht dem Hauptbindemittel des Beschichtungsmittels entspricht. Durch die Paste wird also jedenfalls eine weitere Bindemittelkomponente in das Beschichtungsmittel eingeführt. Hierdurch wird der Herstellungsprozess des Beschichtungsmittels augenscheinlich komplexer. Zudem verliert man bei der Lackherstellung an Formulierungsfreiheit. Denn durch den Einsatz eines bestimmten Polymerisats in der Paste müssen gegebenenfalls andere Lackkomponenten wiederum auch auf dieses Polymerisat abgestimmt sein. Zudem ist weniger Spielraum für den Einsatz weiterer Additive und/oder Bindemittelkomponenten in der Lackierung, da durch einen solchen Einsatz insbesondere der Anteil des primär wichtigen Hauptbindemittels zu weit erniedrigt werden kann.

Wird versucht die obigen Nachteile hinsichtlich der Formulierungsfreiheit auszugleichen, indem man in der Paste ein Polymerisat (Pastenbindemittel) einsetzt, das dem Hauptbindemittel in dem resultierenden Beschichtungsmittel entspricht, müssen in der Regel Kompromisse hinsichtlich der Wahl des Hauptbindemittels und damit der Qualität des resultierenden Beschichtungsmittels und der damit hergestellten Mehrschichtlackierung eingegangen werden. Ein beispielsweise immer wieder auftretendes Problem von Mehrschichtlackierungen ist die Anfälligkeit gegen Nadelstiche. Diese können bekanntermaßen bei der Applikation von Beschichtungsmitteln durch ungewünschte Luft-, Lösemittel- und/oder Feuchtigkeitseinschlüsse entstehen. Die Einschlüsse machen sich in Form von Blasen unterhalb der Oberfläche der Gesamtlackierung bemerkbar und können bei der abschließenden Härtung aufbrechen. Die entsprechenden Löcher werden auch Nadelstiche genannt. Je höher die Schichtdicken der Lackierung, desto anfälliger wird diese für Nadelstiche.

DE 199 48 004 A1 beschreibt ein Polyurethan-Polyacrylat-Mischpolymerisat, welches in wässrigen Basislacken eingesetzt wird. Als Pastenbindemittel wird ein davon verschiedenes Polymerisat eingesetzt. Zudem sind die grundsätzlichen anwendungstechnologischen Eigenschaften des wässrigen Basislacks verbesserungswürdig, insbesondere hinsichtlich der Stabilität gegen Nadelstiche.

WO 91/15528 A1 beschreibt ebenfalls ein Polyurethan-Polyacrylat-Mischpolymerisat, welches in wässrigen Basislacken als Hauptbindemittel und als Pastenbindemittel eingesetzt wird. Die anwendungstechnologischen Eigenschaften einer aus diesem Basislack hergestellten Lackierung sind stark verbesserungswürdig.

### Aufgabe

Aufgabe der vorliegenden Erfindung ist also die Bereitstellung einer Pigmentpaste, die als Pastenbindemittel ein Polymerisat enthält, das ebenfalls in entsprechenden wässrigen Basislacken als Hauptbindemittel eingesetzt werden kann. Die wässrigen Basislacke sollten die geforderten anwendungstechnologischen Eigenschaften, insbesondere ein gutes optisches Erscheinungsbild sowie eine gute Stabilität gegen Nadelstiche, trotzdem optimal erfüllen, wenn nicht gar verbessern können. Auf diese Weise sollten nicht nur optimale Eigenschaften einer resultierenden Lackierung erhalten werden, sondern zudem eine verbesserte Formulierungsfreiheit erlangt werden.

### Technische Lösung

Es wurde gefunden, dass die genannten Aufgaben gelöst werden konnten durch eine Pigmentpaste enthaltend
mindestens eine wässrige Dispersion, enthaltend mindestens ein Mischpolymerisat (MP), wobei das Mischpolymerisat (MP) herstellbar ist, durch
(i) Vorlage einer wässrigen Dispersion mindestens eines Polyurethans, und anschließend
(i) Polymerisation einer Mischung von olefinisch ungesättigten Monomeren in Gegenwart des Polyurethans aus (i),
   wobei
   (a) ein wasserlöslicher Initiator verwendet wird,
   (b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   (c) die Mischung der olefinisch ungesättigten Monomere mindestens ein mehrfach olefinisch ungesättigtes Monomer enthält, sowie
mindestens ein Pigment (P),
wobei das Gewichtsverhältnis des mindestens einen Pigments zu dem mindestens einen Mischpolymerisat (MP) größer 1,5 ist.

Die neue Pigmentpaste wird in der Folge auch als erfindungsgemäße Pigmentpaste bezeichnet und ist demzufolge Gegenstand der vorliegenden Erfindung. Bevorzugte Ausführungsformen der Pigmentpaste gehen aus der folgenden Beschreibung und den Unteransprüchen hervor.

Ebenfalls offenbart ist die Verwendung einer wässrigen Dispersion enthaltend mindestens ein Mischpolymerisat (MP) zur Herstellung von Pigmentpasten beziehungsweise zur Anschlämmung von Pigmenten. Die vorliegende Erfindung betrifft auch ein Verfahren zur Herstellung von Beschichtungsmitteln unter Einsatz einer erfindungsgemäßen Pigmentpaste.

Die erfindungsgemäßen Pasten enthalten als Polymerisat beziehungsweise Pastenbindemittel ein Mischpolymerisat (MP), welches ebenfalls optimal als Hauptbindemittel in Beschichtungsmitteln, insbesondere wässrigen Basislacken, eingesetzt werden kann und dort zu hervorragenden anwendungstechnischen Eigenschaften führt. Demnach können durch die erfindungsgemäße Paste diese anwendungstechnischen Eigenschaften mit einer entsprechenden Formulierungsfreiheit vereint werden.

### Ausführliche Beschreibung

Die erfindungsgemäße Pigmentpaste enthält eine spezielle wässrige Dispersion umfassend mindestens ein spezielles Mischpolymerisat (MP), bevorzugt genau ein Mischpolymerisat (MP).

Ein Mischpolymerisat im Sinne der vorliegenden Erfindung bezeichnet Polymerisate, die aus verschiedenen Polymerarten, beispielsweise einem Polyurethan und einem (Meth)acrylatpolymerisat aufgebaut sind. Es sind dabei ausdrücklich sowohl Polymerisate eingeschlossen, welche kovalent aneinander gebunden sind, als auch solche, bei denen die verschiedenen Polymere durch Adhäsion aneinander gebunden sind. Auch Kombinationen von beiden Arten der Bindung sind von dieser Definition erfasst. Über die Bezeichnung "(Meth)Acrylat" sind Acrylate, Methacrylate sowie Mischungen hiervon erfasst. Die Begriffe Polymer und Polymerisat sind inhaltsgleich und damit austauschbar.

Das Mischpolymerisat (MP) ist herstellbar durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   a. ein wasserlöslicher Initiator verwendet wird,
   b. die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   c. die Mischung der olefinisch ungesättigten Monomere mindestens ein mehrfach olefinisch ungesättigtes Monomer enthält.

Im ersten Herstellungsschritt wird eine wässrige Dispersion eines Polyurethanharzes vorgelegt.

Geeignete gesättigte oder ungesättigte Polyurethanharze werden beispielsweise beschrieben in
- der deutschen Patentanmeldung DE 199 48 004 A1, Seite 4, Zeile 19 bis Seite 11 Zeile 29 (Polyurethanpräpolymer B1)
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden zum einen vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt. Besonders bevorzugt sind aliphatische und aliphatischcycloaliphatische Polyurethanharze.

Als Alkohol-Komponente für die Herstellung der Polyurethanharze werden bevorzugt die dem Fachmann bekannten, gesättigten und ungesättigten Polyole sowie gegebenenfalls in untergeordneten Mengen auch Monoalkohole eingesetzt. Es werden insbesondere Diole und gegebenenfalls in untergeordneten Mengen Triole zur Einführung von Verzweigungen eingesetzt. Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol eingesetzt. Das zahlenmittlere Molekulargewicht wird im Rahmen der vorliegenden Erfindung, sofern nicht spezifisch anders angegeben, mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bevorzugt handelt es sich bei dem in wässriger Dispersion vorgelegten Polyurethan um ein hydrophil stabilisiertes Polyurethan. Zur hydrophilen Stabilisierung beziehungsweise zur Erhöhung der Dispergierbarkeit in wässrigem Medium kann das Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   oder
- nicht ionische hydrophile Gruppen (nicht-ionische Modifizierung)
   oder
- Kombinationen der zuvor genannten Gruppen.

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die ionischen oder potentiell ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Bevorzugt wird mindestens ein organisches Lösemittel zu der vorgelegten Polyurethandispersion gegeben, wobei das organische Lösemittel bevorzugt in jedem Verhältnis mit Wasser und in jedem Verhältnis mit der Mischung von olefinisch ungesättigten Monomeren mischbar ist. Geeignete organische Lösemittel sind N-Methylpyrrolidon, N-Ethylpyrrolidon und Etheralkohole wie insbesondere Methoxypropanol, wobei zu beachten ist, dass sich bereits aus ökologischen Gründen der Verzicht auf pyrrolidonbasierte Lösemittel anbieten kann. Die Menge des organischen Lösemittels wird aber so gewählt, dass der wässrige Charakter der Dispersion erhalten bleibt.

Im zweiten Herstellungsschritt wird eine Polymerisation einer Mischung von olefinisch ungesättigten Monomeren in Gegenwart des Polyurethans nach den Methoden der sogenannten radikalischen Emulsionspolymerisationen in Gegenwart mindestens eines Polymerisationsinitiators durchgeführt.

Bei dem verwendeten Polymerisationsinitiator muss es sich um einen wasserlöslichen Initiator handeln. Beispiele geeigneter Initiatoren sind Kalium-, Natrium- oder Ammoniumperoxodisulfat, sowie Wasserstoffperoxid, tert.-Butylhydroperoxid, 2,2'-Azobis(2-amidoisopropan)dihydrochlorid, 2,2'-Azo- bis-(N,N'-dimethylenisobutyramidin)-dihydrochlorid oder 2,2'-Azo- bis-(4-cyano)pentansäure). Die Initiatoren werden entweder allein oder in Mischung verwendet, beispielsweise Mischungen aus Wasserstoffperoxid und Natriumpersulfat.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator beispielsweise reduzierend wirkenden Schwefelverbindungen, beispielsweise Bisulfite, Sulfite, Thiosulfate, Dithionite oder Tetrathionate von Alkalimetallen und Ammoniumverbindungen, Natriumhydroxymethansulfinat-Dihydrat und/oder Thioharnstoff. So kann man Kombinationen von Peroxodisulfaten mit Alkalimetall- oder Ammoniumhydrogensulfiten einsetzen, beispielsweise Ammoniumperoxidisulfat und Ammoniumdisulfit. Das Gewichtsverhältnis von peroxidhaltigen Verbindungen zu den Redox-Coinitiatoren beträgt vorzugsweise 50 : 1 bis 0,05 : 1. In Kombination mit den Initiatoren bzw. den Redoxinitiatorsystemen können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt- IIchlorid, Nickel-II-sulfat, Kupfer-I-chlorid, Mangan-II-acetat, Vanadium-III-acetat, Mangan-II-chlorid. Bezogen auf die Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30% Wasserstoffperoxid und 0,1 bis 500 ppm Mohrsches Salz.

Die Initiatoren werden bevorzugt in einer Menge von 0,05 bis 20 Gew.-%, bevorzugt 0,05 bis 10, besonders bevorzugt von 0,1 bis 5 Gew.-% bezogen auf das Gesamtgewicht der zur Polymerisation eingesetzten olefinisch ungesättigten Monomere eingesetzt. Die Begriffe Gesamtmenge und Gesamtgewicht sind gleichbedeutend.

Die Verwendung des wasserlöslichen Initiators bedingt, dass olefinisch ungesättigte Monomere, die zu der vorgelegten wässrigen Dispersion gegeben werden, sofort zu Oligomeren reagieren können. Diese Oligomere haben eine geringere Tendenz in die Polyurethanteilchen der vorgelegten Dispersion einzudringen als die kleineren Monomere.

Die Polymerisation wird zweckmäßigerweise beispielsweise bei einer Temperatur von größer 0 bis 160°C, vorzugsweise 60 bis 95°C durchgeführt.

Dabei wird bevorzugt unter Ausschluss von Sauerstoff gearbeitet, vorzugsweise in einem Stickstoffstrom. In der Regel wird die Polymerisation bei Normaldruck durchgeführt, jedoch ist auch die Anwendung von niedrigeren Drucken oder höheren Drucken möglich, insbesondere wenn Polymerisationstemperaturen angewendet werden, die oberhalb des Siedepunktes der Monomere und/oder der organischen Lösungsmittel liegen.

Die Herstellung der erfindungsgemäß einzusetzenden Mischpolymerisate (MP) erfolgt durch radikalische wäßrige Emulsionspolymerisation, wobei dem Reaktionsmedium Tenside oder Schutzkolloide zugesetzt werden können. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff.

Wichtig für die Herstellung der erfindungsgemäß einzusetzenden wässrigen Dispersionen enthaltend das Mischpolymerisat (MP) ist die Kontrolle der Bedingungen der Polymerisationsreaktion der Mischung von olefinisch ungesättigten Monomeren in Gegenwart des Polyurethans. Diese wird so durchgeführt, dass es sich um eine so genannte "verhungernde Polymerisation" (auch als "starve feed", "starve fed" oder "starved feed" Polymerisation bekannt) handelt.

Als verhungernde Polymerisation im Sinne der vorliegenden Erfindung wird eine Emulsionspolymerisation angesehen bei der der Gehalt an Restmonomeren in der Reaktionslösung während der Reaktionsdauer minimiert wird, das heißt die Zudosierung der olefinisch ungesättigten Monomere so erfolgt, dass in der Reaktionslösung eine Konzentration von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge an zur Polymerisation eingesetzten olefinisch ungesättigten Monomeren, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%, jeweils bezogen auf die Gesamtmenge an zur Polymerisation eingesetzten olefinisch ungesättigten Monomeren. Beispielsweise kann der höchste während der Reaktion zu detektierende Anteil (beziehungsweise die Konzentration) bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Der Begriff Konzentration ist in diesem Zusammenhang also offensichtlich gleichbedeutend mit dem Begriff Anteil.

Die Konzentration der Monomere in der Reaktionslösung, im Folgenden als freie Monomere bezeichnet, kann auf verschiedene Art und Weisen gesteuert werden.

Eine Möglichkeit die Konzentration der freien Monomere gering zu halten ist es, die Dosiergeschwindigkeit der Mischung der olefinisch ungesättigten Monomere sehr niedrig zu wählen. Wenn die Zudosiergeschwindigkeit so niedrig ist, dass alle Monomere möglichst schnell reagieren können sobald sie in der Reaktionslösung sind, kann sichergestellt werden, dass die Konzentration der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Die Initiatormenge ist ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmen kann, ist der Aufbau der Monomere, das heißt insbesondere deren strukturelle Eigenschaften und die sich daraus ableitende Reaktivität.

Die Kontrolle der Konzentration der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen insbesondere dem Ziel die Konzentration der freien Monomere unter den oben genannten Grenzen zu halten.

Die Konzentration der Monomere in der Reaktionslösung kann dabei zu jedem Zeitpunkt der Reaktion gaschromatographisch bestimmt werden. Typische Parameter für die gaschromatographische Bestimmung sind die folgenden: 50m Silica-Kapillarsäule mit Polyethylenglykol-Phase oder 50m Silica-Kapillarsäule mit Polydimethylsiloxan-Phase, Trägergas Helium, Splitinjektor 150°C, Ofentemperatur 40 bis 220°C, Flammionisationsdetektor, Detektortemperatur 275°C, interner Standard Isobutylacrylat. Die Bestimmung der Konzentration der Monomere erfolgt im Rahmen der vorliegenden Erfindung bevorzugt gaschromatograhisch, insbesondere unter Einhaltung der oben genannten Parameter.

Sollte bei dieser Analyse eine Konzentration an freien Monomeren bestimmt werden, die nah an den Grenzwert für die verhungernde Polymerisation kommt, beispielsweise aufgrund eines hohen Anteils olefinisch ungesättigter Monomere, die eine geringe Reaktivität besitzen, können die oben genannten Parameter zur Steuerung der Reaktion genutzt werden. Es kann in diesem Fall beispielsweise die Dosiergeschwindigkeit der Monomere verringert und/oder die Menge an Initiator erhöht werden.

Geeignete olefinisch ungesättigte Monomere können einfach oder mehrfach olefinisch ungesättigt sein. Bevorzugt sind mindestens ein einfach olefinisch ungesättigtes und mindestens ein mehrfach olefinisch ungesättigtes Monomer enthalten.

Beispiele geeigneter einfach olefinisch ungesättigter Monomere umfassen vinylische einfach olefinisch ungesättigte Monomere wie insbesondere (meth)acrylat-basierte einfach olefinisch ungesättigte Monomere und Allylverbindungen. Beispiele sind auch alpha-beta ungesättigte Carbonsäuren. Bevorzugt werden jedenfalls, aber nicht zwingend ausschließlich, (meth)acrylat-basierte einfach olefinisch ungesättigte Monomere eingesetzt.

Bei den (meth)acrylat-basierten, einfach olefinisch ungesättigten Monomeren kann es sich beispielsweise um (Meth)acrylsäure und Ester, Nitrile, oder Amide der (Meth)acrylsäure handeln.

Bevorzugt sind Ester der (Meth)acrylsäure, mit einem Rest R, der nicht olefinisch ungesättigt ist. 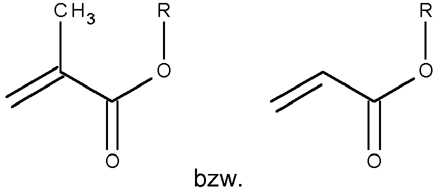 Der Rest R kann aliphatisch oder aromatisch sein. Bevorzugt ist der Rest R aliphatisch.

Der Rest R kann beispielsweise ein Alkylrest sein, oder Heteroatome enthalten. Beispiele für Reste R, die Heteroatome enthalten sind Ether. Bevorzugt werden jedenfalls, aber nicht zwingend ausschließlich, Monomere eingesetzt, bei denen der Rest R ein Alkylrest ist.

Für den Fall, dass R ein Alkylrest ist, kann es sich beispielsweise um einen linearen, verzweigten oder cyclischen Alkylrest handeln. In allen drei Fällen kann es sich um unsubstituierte oder um mit funktionellen Gruppen substituierte Alkylreste handeln. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem unsubstituierten Alkylrest sind Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Geeignete einfach ungesättigte Ester der (Meth)acrylsäure mit einem substituierten Alkylrest können bevorzugt mit einer oder mehreren Hydroxylgruppen substitutiert sein.

Besonders bevorzugte einfach ungesättigte Ester der (Meth)acrylsäure mit einem mit einer oder mehreren Hydroxylgruppen substituierten Alkylrest sind 2-Hydroxyethyl(meth)acrylat, 2-Hydroxypropyl(meth)acrylat, 3- Hydroxypropyl (meth)acrylat, 3-Hydroxybutyl(meth)acrylat sowie 4-Hydroxybutyl(meth)acrylat.

Bei möglichen weiteren vinylischen einfach ungesättigten Monomeren handelt es sich um Monomere mit einem Rest R' an der Vinylgruppe, der nicht olefinisch ungesättigt ist.

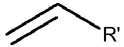

Der Rest R' kann aliphatisch oder aromatisch sein, wobei aromatische Reste bevorzugt sind.

Der Rest R' kann ein Kohlenwasserstoffrest sein, oder Heteroatome enthalten. Beispiele für Reste R', die Heteroatome enthalten sind Ether, Ester, Amide, Nitrile und Heterocylen. Bevorzugt handelt es sich beim Rest R' um einen Kohlenwasserstoffrest. Für den Fall, dass es sich bei R' um einen Kohlenwasserstoffrest handelt, kann dieser mit Heteroatomen substituiert oder unsubstituiert sein, wobei unsubstituierte Reste bevorzugt sind. Bevorzugt ist der Rest R' ein aromatischer Kohlenwasserstoffrest.

Besonders bevorzugte weitere vinylische olefinisch ungesättigte Monomere sind vinylaromatische Kohlenwasserstoffe, insbesondere Vinyltoluol, alpha-Methylstyrol und insbesondere Styrol.

Weitere bevorzugte Monomere, die Heteroatome enthalten, sind olefinisch ungesättigte Monomere wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N-Vinylimidazol und N-Vinyl-2-Methylimidazolin.

Beispiele geeigneter mehrfach olefinisch ungesättigter Monomere umfassen Ester der (Meth)acrylsäure mit einem olefinisch ungesättigten Rest R" und Allylether von mehrwertigen Alkoholen.

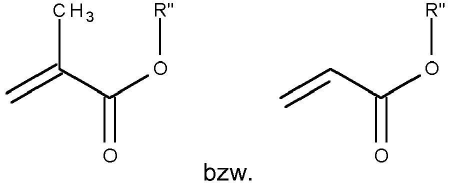

Bei dem Rest R" kann es sich beispielsweise um einen Allylrest oder um einen (Meth)acrylsäureesterrest handeln.

Bevorzugte mehrfach olefinisch ungesättigte Monomere sind Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Hexandioldi(meth)acrylat und Allyl(meth)acrylat.

Bevorzugte mehrfach olefinisch ungesättigte Verbindungen sind auch Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylatdiallylether, Pentaerythrittri(meth)acrylatmonoallylether, Pentaerythritdi(meth)acrylatdiallylether, Pentaerythrit(meth)acrylattriallylether, Triallylsaccharose, und Pentaallylsaccharose.

Besonders bevorzugt wird Allylmethacrylat als mehrfach olefinisch ungesättigtes Monomer eingesetzt.

Die Mischung der olefinisch ungesättigten Monomere enthält mindestens ein mehrfach olefinisch ungesättigtes Monomer. Bevorzugt enthält die Mischung der olefinisch ungesättigten Monomere außerdem ein oder mehrere einfach ungesättigte Ester der (Meth)acrylsäure mit einem unsubstituierten Alkylrest.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 1,0 mol-% mehrfach olefinisch ungesättigte Monomere. Bevorzugt ist der Rest der olefinisch ungesättigten Monomere einfach ungesättigt.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 2,0 mol-% Allylmethacrylat. Besonders bevorzugt sind außer Allylmethacrylat keine weiteren mehrfach olefinisch ungesättigten Monomere in der Mischung enthalten.

Bevorzugt enthält die Mischung von olefinisch ungesättigten Monomeren weniger als 10,0 Gew.-%, besonders bevorzugt weniger als 5,0 Gew.-% vinylaromatische Kohlenwasserstoffe, bezogen auf die Gesamtmenge an bei der Polymerisation eingesetzten olefinisch ungesättigten Monomeren. Ganz besonders bevorzugt sind keine vinylaromatischen Kohlenwasserstoffe in der Mischung der olefinisch ungesättigten Monomere enthalten. Besonders bevorzugt ist es, wenn weniger als 10,0 Gew.-%, besonders bevorzugt weniger als 5,0 Gew.-%, bezogen auf die Gesamtmenge an bei der Polymerisation eingesetzten olefinisch ungesättigten Monomeren, von olefinisch ungesättigten Monomeren mit aromatischen Gruppen eingesetzt werden. Insbesondere sind keine olefinisch ungesättigten Monomere mit aromatischen Gruppen in der Mischung der olefinisch ungesättigten Monomere enthalten.

Daraus folgt, dass die oben als bevorzugt angegebenen vinylaromatische Kohlenwasserstoffe, insbesondere Vinyltoluol, alpha-Methylstyrol und Styrol, natürlich nur innerhalb der Gruppe der Monomere enthaltend aromatische Gruppen bevorzugt sind. Trotzdem gilt im Sinne der Erfindung, dass diese Monomere bevorzugt nicht eingesetzt werden. Sollte sich dann im Einzelfall der Einsatz solcher Monomere trotzdem anbieten, werden bevorzugt die als bevorzugt gekennzeichneten Monomere enthaltend aromatische Gruppen eingesetzt.

In einer bevorzugten Ausführungsform enthält die Mischung von olefinisch ungesättigten Monomeren:
- 98,0 bis 99,5 Gew.-% von einem oder mehreren einfach ungesättigten Estern der (Meth)acrylsäure mit unsubstituierten Alkylresten, wobei die Alkylreste bevorzugt 1 bis 10 Kohlenstoffatomen haben, und
- 0,5 bis 2,0 Gew.-% von einem oder mehreren mehrfach ungesättigten Estern der (Meth)acrylsäure,
jeweils bezogen auf die Gesamtmenge an bei der Polymerisation eingesetzten olefinisch ungesättigten Monomeren.

Bevorzugt wird der Mischung von olefinisch ungesättigten Monomeren mindestens ein Lösemittel zugesetzt, wobei das Lösemittel bevorzugt in jedem Verhältnis mit Wasser und in jedem Verhältnis mit der Mischung von olefinisch ungesättigten Monomeren mischbar ist. Geeignete organische Lösemittel sind N-Methylpyrrolidon, N-Ethylpyrrolidon und Etheralkohole wie insbesondere Methoxypropanol, wobei zu beachten ist, dass sich bereits aus ökologischen Gründen der Verzicht auf pyrrolidonbasierte Lösemittel anbieten kann. Die Menge des organischen Lösemittels wird aber so gewählt, dass der wässrige Charakter der letztlich erhaltenen Dispersion erhalten bleibt.

Durch den beschriebenen Herstellungsprozess haben die Mischpolymerisate in der erfindungsgemäßen wässrigen Dispersion insbesondere einen Kern-Schale-Aufbau, der durch den angegebenen Herstellungsprozess erreicht werden kann. Der Kern-Schale Aufbau ist dabei charakterisiert durch einen Kern, enthaltend mindestens ein Polyurethan, und eine Schale, enthaltend mindestens ein Polymer welches durch Polymerisation von olefinisch ungesättigten Monomeren erhalten wurde.

Der beschriebene Kern-Schale-Aufbau wird durch die speziellen Reaktionsbedingungen der verhungernden Polymerisation erreicht. Es sind während der gesamten Reaktionsdauer nie größere Mengen an olefinisch ungesättigten Monomeren in Gegenwart des vorgelegten Polyurethans vorhanden, welche in das Polyurethanteilchen eindringen könnten. Durch die während der Monomerzugabe in der wässrigen Phase immer vorhandenen Radikale, die der wasserlösliche Initiator bereitstellt, werden bei Zugabe sofort Oligomere gebildet, die nicht mehr in das Polyurethan eindringen können. Diese polymerisieren sodann auf der Oberfläche des Polyurethans.

In einer bevorzugten Ausführungsform beträgt das Gewichtsverhältnis von Kern zu Schale 80:20 bis 20:80, besonders bevorzugt 60:40 bis 40:60. Gemeint ist hierbei das Verhältnis der Mengen an zur Herstellung von Kern (Schritt (i), Polyurethan) und Schale (Schritt (ii), Mischung von olefinisch ungesättigten Monomeren) eingesetzten Komponenten.

Bevorzugt haben die Mischpolymerisate (MP) in der wässrigen Dispersion eine Teilchengröße (z-Mittel) von 60 bis 130, besonders bevorzugt von 70 bis 115 nm, gemessen mittels Photonkorrelationsspektroskopie mit einem Malvern Nano S90 (Fa. Malvern Instruments) bei 25 ± 1 °C. Das Gerät, ausgestattet mit einem 4mW He-Ne Laser bei einer Wellenlänge von 633nm, deckt einen Größenbereich von 1 bis 3000 nm ab.

Die Mischpolymerisate (MP) können bevorzugt vernetzt sein. Der Gelanteil der erfindungsgemäßen wässrigen Dispersion beträgt bevorzugt 40 bis 97 Gew.-%, besonders bevorzugt 75 bis 90 Gew.-%, jeweils bezogen auf den Festkörper der Dispersion.

Der Gelanteil kann gravimetrisch bestimmt werden, indem die Dispersion gefriergetrocknet wird, die Gesamtmasse des gefriergetrockneten Polymers bestimmt wird (entspricht im Rahmen der Bestimmung des Gelanteils dem Festkörper der Dispersion) und das Polymer anschließend 24 Stunden bei 25°C in einem Überschuss an Tetrahydrofuran (Verhältnis Tetrahydrofuran zu gefriergetrocknetem Polymer = 300 : 1) extrahiert wird. Der unlösliche Anteil wird abgetrennt und bei 50°C vier Stunden lang im Umluftofen getrocknet. Im Anschluss wird der getrocknete, unlösliche Anteil gewogen und der Quotient mit der Gesamtmasse des gefriergetrockneten Polymers gebildet. Der erhaltene Wert entspricht dem Gelanteil.

Die gewichtsmittlere Molmasse der Mischpolymerisate (MP) beträgt bevorzugt 3^{∗}10⁷ g/mol bis 8,5^{∗}10⁹ g/mol, wobei die gewichtsmittlere Molmasse mit Kleinwinkel-Laserlichtstreuung ermittelt werden kann.

Die Säurezahl der Mischpolymerisate (MP) beträgt bevorzugt 0 bis 220 mg KOH/g Festharz, bevorzugt 0 bis 40 mg KOH / g Festharz, besonders bevorzugt 0 bis 25 mg KOH/g Festharz. Die OH-Zahl ist bevorzugt kleiner 70, bevorzugt kleiner 20 mg KOH/g Festharz. Die Begriffe Festharz und Festkörper in Bezug auf ein Polymer beziehungsweise eine Dispersion eines Polymers sind bedeutungsgleich. Es handelt sich also insbesondere um den wie weiter unten erläuterten Festkörper beziehungsweise Festkörpergehalt einer Polymerdispersion.

Die Säurezahl kann beispielsweise in Anlehnung an die DIN EN ISO 2114 in homogener Lösung aus THF / Wasser (9 Vol.-Teile THF und 1 Vol.-Teil destilliertes Wasser) mit ethanolischer Kaliumhydroxid-Lösung bestimmt werden.

Die OH-Zahl kann in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt werden, wobei der verbliebene Überschuss an Essigsäureanhydrid nach Acetylierung vollständig hydrolysiert wird und die Essigsäure mit alkoholischer Kaliumhydroxid-Lösung potentiometrisch zurücktitriert wird.

Die wässrigen Dispersionen des mindestens einen Mischpolymerisats (MP) weisen bevorzugt einen Festkörpergehalt von 15 bis 45 Gew.-%, insbesondere bevorzugt 25 bis 35 Gew.-% auf. Solche Festkörpergehalte können problemlos durch den Einsatz entsprechender Mengen von organischen Lösungsmitteln und insbesondere Wasser bei der Herstellung der Mischpolymerisate und/oder durch entsprechende Verdünnung nach der Herstellung eingestellt werden.

Unter Festkörpergehalt (nicht-flüchtiger Anteil, Feststoffgehalt) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten der Pigmentpaste, beispielsweise eines Mischpolymerisats (MP), am Gesamtgewicht der Paste festzulegen beziehungsweise vorzubestimmen. Es wird also der Festkörper einer Dispersion eines Mischpolymerisates (MP), welche der Paste zugegeben werden soll, bestimmt. Durch Berücksichtigung des Festkörpers der Dispersion und der in der Paste eingesetzten Menge der Dispersion kann dann der Anteil der Komponente an der Gesamtkomposition ermittelt beziehungsweise festgelegt werden.

Der Ausdruck "wässrig" ist dem Fachmann bekannt. Gemeint ist grundsätzlich eine Zusammensetzung, das nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass die jeweilige Zusammensetzung, einen Anteil von mindestens 40 Gew.-%, bevorzugt mindestens 50 Gew.-%, ganz besonders bevorzugt mindestens 60 Gew.-%, insbesondere mindestens 70 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 95 Gew.-%, insbesondere 50 bis 92,5 Gew.-%, ganz besonders bevorzugt 60 bis 90 Gew.-%, besonders bevorzugt 70 bis 87,5 Gew.-%, jeweils bezogen auf die Gesamtmenge der enthaltenen Lösemittel.

Der Anteil der Mischpolymerisate (MP) liegt vorzugsweise im Bereich von 3,0 bis 35 Gew.-%, bevorzugt 4,0 bis 30,0 Gew.-%, besonders bevorzugt 5,0 bis 25,0 Gew.-%, insbesondere 6,0 bis 20,0 Gew.-%, jeweils bezogen auf das Gesamtgewicht der erfindungsgemäßen Pigmentpaste

Die erfindungsgemäße Pigmentpaste enthält mindestens ein Pigment (P), das heißt ein farb- und/oder effektgebendes Pigment. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind beispielsweise plättchenförmige Metalleffektpigmente wie plättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente (Mica) und/oder sonstige Effektpigmente wie plättchenförmiges Graphit, plättchenförmiges Eisenoxid, Mehrschicht-Effekt-Pigmente aus PVD-Filmen und/oder Liquid Crystal Polymer-Pigmente. Besonders bevorzugt sind plättchenförmige Effektpigmente, insbesondere plättchenförmige Aluminiumpigmente und Metalloxid-Glimmer-Pigmente in der Pigmentpaste enthalten.

Es können allerdings auch oder zusätzlich typische Farbpigmente enthalten sein. Als Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Der Anteil der Pigmente kann beispielsweise im Bereich von 10 bis 75 Gew.-%, bevorzugt 15 bis 70 Gew.-%, besonders bevorzugt 20 bis 60 Gew.-%, jeweils bezogen auf das Gesamtgewicht der erfindungsgemäßen Pigmentpaste liegen.

Das Gewichtsverhältnis des mindestens einen Pigments (P) zu dem mindestens einen Mischpolymerisat (MP) in der Pigmentpaste beträgt mindestens 1,5, bevorzugt mindestens 2,0, insbesondere bevorzugt mindestens 2,5 und ganz besonders bevorzugt mindestens 3,0. Darunter bevorzugt sind Bereiche von 1,5 bis 10,0, bevorzugt 2,0 bis 8,5 insbesondere bevorzugt 2,5 bis 7 und ganz besonders bevorzugt 3,0 bis 5,0.

Die Pigmentpaste enthält Wasser. Dies folgt aus der Tatsache, dass die Pigmentpaste eine wässrige Dispersion eines Mischpolymerisats (MP) enthält. Zudem kann die Pigmentpaste mindestens ein typisches organisches Lösemittel wie beispielsweise Butylglykol enthalten.

Der Anteil Wasser beträgt bevorzugt 5 bis 60 Gew.-%, insbesondere bevorzugt 10 bis 50 Gew.-%, ganz besonders bevorzugt 15 bis 40 Gew.-%, jeweils bezogen auf das Gesamtgewicht der Pigmentpaste.

Der Anteil organischer Lösemittel beträgt einer Ausführungsform bevorzugt 15 bis 65 Gew.-%, insbesondere bevorzugt 20 bis 55 Gew.-%, ganz besonders bevorzugt 25 bis 45 Gew.-%, jeweils bezogen auf das Gesamtgewicht der Pigmentpaste. Das Hinzufügen von organischen Lösemitteln bietet sich insbesondere bei Pasten enthaltend Aluminiumeffektpigmente an. Die Paste kann in einer weiteren Ausführungsform aber auch vollständig oder nahezu vollständig frei von organischen Lösemitteln sein. Dies ist bevorzugt dann der Fall, wenn als Pigmente Metalloxid-Glimmer-Pigmente (Mica) eingesetzt werden. In einem solchen Fall liegt der Anteil von organischen Lösemitteln bei bevorzugt kleiner 10 Gew.-%, insbesondere kleiner 5 Gew.-%.

Die Pigmentpaste kann auch übliche Additive wie insbesondere Netz- und Dispergiermittel enthalten. Solche Additive werden in den üblichen und bekannten Mengen eingesetzt.

Vorzugsweise liegt der Festkörpergehalt der erfindungsgemäßen Pigmentpaste bei 20 bis 80 Gew.-%, besonders bevorzugt bei 25 bis 70 Gew.-%, ganz besonders bevorzugt bei 30 bis 60 Gew.-%.

Die Pigmentpaste wird zur Herstellung von Beschichtungsmitteln eingesetzt, insbesondere wässrigen Basislacken, wie sie im Bereich der Automobilindustrie eingesetzt werden.

Die Beschichtungsmittel enthalten bevorzugt ebenfalls ein Mischpolymerisat (MP). Bevorzugt enthält die Pigmentpaste dasselbe Mischpolymerisat (MP) wie das Beschichtungsmittel.

Bevorzugt ist ein Mischpolymerisat das Hauptbindemittel des Beschichtungsmittels. Als Hauptbindemittel wird im Rahmen der vorliegenden Erfindung ein Bindemittelbestandteil dann bezeichnet, wenn es keinen anderen Bindemittelbestandteil in dem Beschichtungsmittel gibt, welches in einem höheren Anteil, bezogen auf das Gesamtgewicht des jeweiligen Beschichtungsmittels, vorhanden ist. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Ein Bindemittelbestandteil ist demzufolge eine bestimmte Komponente, die zum Bindemittel eines Beschichtungsmittels beiträgt. Beispielhaft sei auf ein bestimmtes Polymerisat wie ein Mischpolymerisat (MP), ein Vernetzungsmittel wie ein Melaminharz oder ein bestimmtes Additiv verwiesen.

Die Beschichtungsmittel, in denen die erfindungsgemäße Paste bevorzugt eingesetzt wird, enthalten also bevorzugt eine wässrige Dispersion eines Mischpolymerisats (MP). Das Mischpolymerisat (MP) ist bevorzugt der Hauptbindemittelbestandteil des Beschichtungsmittels. Der Anteil des Mischpolymerisats (M) liegt bevorzugt im Bereich von 2,0 bis 30,0 Gew.-%, bevorzugt 3,0 bis 20,0 Gew.-%, besonders bevorzugt 4,0 bis 15,0 Gew.-%, jeweils bezogen auf das Gesamtgewicht des Beschichtungsmittels.

Das Beschichtungsmittel enthält, augenscheinlich zumindest durch den Einsatz einer erfindungsgemäßen Pigmentpaste, mindestens ein Pigment. Entsprechende Pigmente sind weiter oben beschrieben. Auch die dort beschriebenen bevorzugten Ausführungsformen gelten für das Beschichtungsmittel. Der Anteil der Pigmente liegt vorzugsweise im Bereich von 0,5 bis 40,0 Gew.-%, bevorzugt 2,0 bis 20,0 Gew.-%, besonders bevorzugt 3,0 bis 15,0 Gew.-%, jeweils bezogen auf das Gesamtgewicht des Beschichtungsmittels.

Das Beschichtungsmittel enthält bevorzugt noch mindestens ein von den Mischpolymerisaten (MP) verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyurethan-Polyacrylate. Bevorzugte Polyurethane sind die bereits oben bei der Beschreibung des Schritts (i) der Herstellung der Mischpolymerisate (MP) genannten Polyurethane. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 beschrieben. Bevorzugte von den Mischpolymerisaten (MP) verschiedene Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell. Der Anteil solcher Polymere ist bevorzugt jedenfalls kleiner als der Anteil des Mischpolymerisats (MP).

Zudem enthält das Beschichtungsmittel bevorzugt mindestens ein an sich bekanntes typisches Vernetzungsmittel. Bevorzugt enthält es als Vernetzungsmittel mindestens ein Aminoplastharz und/oder ein blockiertes Polyisocyanat, bevorzugt ein Aminoplastharz. Unter den Aminoplastharzen sind insbesondere Melaminharze bevorzugt. Der Anteil der Vernetzer ist bevorzugt jedenfalls kleiner als der Anteil des Mischpolymerisats (MP).

Darüber hinaus kann das Beschichtungsmittel noch mindestens einen Zusatzstoff enthalten. Beispiele für derartige Zusatzstoffe sind Verdicker wie anorganische Verdicker, beispielsweise Schichtsilikate, und organische Verdicker, beispielsweise (Meth)acrylsäure-(Meth)acrylat-Copolymerisat-Verdicker, wie beispielsweise das Handelsprodukt Rheovis AS S130 (BASF) und Polyurethanverdickern, wie beispielsweise das Handelsprodukt Rheovis PU 1250 (BASF). Weitere mögliche Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Sie können in den bekannten und üblichen Anteilen eingesetzt werden.

Bevorzugt handelt es sich bei dem Beschichtungsmittel um ein wässriges Beschichtungsmittel, insbesondere einen wässrigen Basislack. Unter einem Basislack ist insbesondere ein in der Automobillackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert.

Demzufolge richtet sich die vorliegende Erfindung auch auf die Herstellung von Mehrschichtlackierungen, wobei im Rahmen dieser Herstellung mindestens eine Pigmentpaste eingesetzt wird, nämlich zur Herstellung eines wässrigen Basislacks. Ebenfalls offenbart ist die Verwendung einer wässrigen Dispersion enthaltend mindestens ein wie oben beschriebenes Mischpolymerisat (MP) zur Herstellung von Pigmentpasten beziehungsweise zur Anschlämmung von Pigmenten.

Im Folgenden wird die vorliegende Erfindung anhand von Beispielen erläutert.

### Beispiele

### A) Herstellung eines Mischpolymerisats (MP) beziehungsweise einer wässrigen Dispersion enthaltend dieses Polymerisat

a) Eine Dispersion eines alpha-methylstyryl-haltigen Polyurethans wurde in Anlehnung an die Patentschrift DE 19948004 B4, Seite 27, Beispiel 1, "Herstellung eines erfindungsgemäßen Polyurethans (B)", hergestellt, wobei zusätzlich Trimethylolpropan eingesetzt wurde und der Festanteil der resultierenden Dispersion nur 29 statt 35,1 Gew.-% betrug. In Anlehnung an das in der Patentschrift DE 19948004 B4 erwähnte Addukt (B2), Herstellbeispiel 1, wurde ein Addukt mit Monoethanolamin statt mit Diethanolamin hergestellt:
   Hierzu wurde zuerst in einem Reaktionsgefäß, ausgerüstet mit Rührer, Innenthermometer, Rückflußkühler und elektrischer Heizung unter Stickstoff 200,0 Gewichtsteile Methylethylketon, 800,0 Gewichtsteile N-Methylpyrrolidon und 221,3 Gewichtsteile Monoethanolamin (Fa. BASF SE) bei 20°C vorgelegt. Zu dieser Mischung wurden während eineinhalb Stunden 778,7 Gewichtsteile 1-(1-Isocyanato-1-methylethyl)-3-(1-methylethenyl)-benzol (TMI® (META) Unsaturated Aliphatic Isocyanate, Fa. Cytec) mit einem Isocyanatgehalt von 20,4 Gew.-% Isocyanat zugetropft, so daß die Reaktionstemperatur 40°C nicht überschritten wurde. Die resultierende Reaktionsmischung wurde so lange gerührt, bis keine freien Isocyanatgruppen mehr nachweisbar waren. Danach wurde die Reaktionsmischung mit 200 ppm Hydrochinon stabilisiert.
   Der theoretische Feststoffgehalt der so hergestellten Lösung des beschriebenen Addukts lag bei 50 Gew.-%.
   Nun wurde in einem weiteren Reaktionsgefäß, ausgerüstet mit Rührer, Innenthermometer, Rückflußkühler und elektrischer Heizung, 431,7 Gewichtsteile eines linearen Polyesterpolyols und 69,7 Gewichtsteile Dimethylolpropionsäure (Fa. GEO Speciality Chemicals) in 355,8 Gewichtsteilen Methylethylketon und 61,6 Gewichtsteilen N-Methylpyrrolidon unter Stickstoff gelöst. Das lineare Polyesterpolyol wurde zuvor aus dimerisierter Fettsäure (Pripol ® 1012, Fa. Uniqema), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil und ein zahlenmittlere Molmasse von 1379 g/mol auf. Zu der resultierenden Lösung wurden bei 45°C 288,6 Gewichtsteile Isophorondiisocyanat (Basonat® I, Fa. BASF SE) mit einem Isocyanatgehalt von 37,75 Gew.-% hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt der Lösung 3,2 Gew.-% betrug und konstant war. Danach wurde die Reaktionsmischung auf 65°C abgekühlt und 85,2 Gewichtsteile des oben beschriebenen Addukts zusammen mit 21,8 Gewichtsteilen Trimethylolpropan (Fa. BASF SE) hinzugegeben. Die resultierende Reaktionsmischung wurde so lange bei 65°C gerührt, bis der Isocyanatgehalt der Lösung auf 1,0 Gew.-% gesunken war. Jetzt wurden 22,2 Gew.-% Diethanolamin (Fa. BASF SE) zugegeben und der Gehalt an Isocyanatgruppen verfolgt, bis keine freien Isocyanatgruppen mehr nachweisbar waren. Das resultierende, gelöste Polyurethan wurde mit 139,7 Gewichtsteilen Methoxypropanol und 43,3 Gewichtsteilen Triethylamin (Fa. BASF SE) versetzt. 30 Minuten nach der Aminzugabe wurde die Temperatur der Lösung auf 60°C gesenkt, wonach während 30 Minuten 1981 Gewichtsteile deionisiertes Wasser unter Rühren hinzugegeben wurden. Aus der resultierenden Dispersion wurde das Methylethylketon bei 60°C unter Vakuum abdestilliert. Hiernach wurden eventuelle Lösemittel- und Wasserverluste ausgeglichen.
   Die so erhaltene Dispersion eines alpha-methylstyryl-haltigen Polyurethans wies einen Feststoffgehalt von 29,0 Gew-% auf, die Säurezahl lag bei 34,0 mg KOH / g Feststoffgehalt und der pH-Wert bei 7,0 (gemessen bei 23°C).
b) Zur Herstellung der wässrigen Primärdispersion des erfindungsgemäßen Mischpolymerisats (MP) wurden unter Stickstoffatmosphäre 1961,2 Gewichtsteile der alpha-Methylstyryl-haltigen Polyurethandispersion gemäß a) mit 40,0 Gewichtsteilen Methoxypropanol (0,07% auf Polyurethan) und 686,5 Gewichtsteilen deionisiertem Wasser verdünnt und auf 80°C erhitzt. Nachdem der Reaktorinhalt auf 80°C temperiert wurde, wurden 0,6 Gewichtsteile Ammoniumperoxodisulfat, gelöst in 35,7 Gewichtsteilen deionisiertem Wasser, unter Normaldruck in den Reaktor gegeben. Anschließend wurde unter fortwährendem Rühren ein Gemisch aus 301,6 Gewichtsteilen Methylmethacrylat, 261,6 Gewichtsteilen n-Butylacrylat, 5,6 Gewichtsteilen Allylmethacrylat (0,87 Mol-% bezogen auf Gesamtvinylmonomer) und 134,9 Gewichtsteilen N-Methylpyrrolidon während fünf Stunden gleichmäßig zugegeben. Mit Beginn der Zugabe der Monomermischung wurde eine Lösung von 1,1 Gewichtsteilen Ammoniumperoxodisulfat in 71,3 Gewichtsteilen deionisiertem Wasser ebenfalls innerhalb von fünf Stunden zugegeben.

Während der radikalischen Polymerisation wurde im 30 Minuten - Takt der Gehalt an freien Monomeren mittels Gaschromatographie (GC) bestimmt (GC: einmal 50m Silica-Kapillarsäule mit Polyethylenglykol-Phase und einmal mit 50m Silica-Kapillarsäule mit Polydimethylsiloxan-Phase, Trägergas Helium, Splitinjektor 150°C, Ofentemperatur 40 - 220°C, Flammionisationsdetektor, Detektortemperatur 275°C, interner Standard Isobutylacrylat), wobei nach 30 min der höchste Gesamtgehalt Monomer bezogen auf Dispersion mit 0,5 Gew.-% ermittelt wurde (3,1 Gew.-% bezogen auf die Gesamtmenge an zur Polymerisation eingesetzten olefinisch ungesättigten Monomeren). Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine sehr gute Lagerstabilität auf. Ihr Feststoffgehalt lag bei 32,5 Gew.-%, die Säurezahl bei 18,8 mg KOH / g Feststoffgehalt und ihr pH-Wert bei 7,0. Die Teilchengröße (z-Mittel) mittels Photonkorrelationsspektroskopie betrug 96 nm. Mittels Gaschromatographie (GC: einmal mit 50m Silica-Kapillarsäule mit Polyethylenglykol-Phase und einmal 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) wurde ein Gehalt von 2,7 Gew.-% Methoxypropanol und 5,7 Gew.-% N-Methylpyrrolidon ermittelt.

Der Gelanteil wurde gravimetrisch nach Extraktion des gefriergetrockneten Polymeren mittels Tetrahydrofuran mit 80,3 Gew.-% ermittelt. Dazu wurde die Dispersion gefriergetrocknet, die Masse des gefriergetrockneten Polymeren bestimmt, um das Polymer anschließend 24 Stunden bei 25°C in einem Überschuss an Tetrahydrofuran (Verhältnis Tetrahydrofuran zu gefriergetrocknetem Mischpolymerisat = 300 : 1) zu extrahieren. Der unlösliche Anteil (Gelanteil) wurde isoliert, 4 Stunden bei 50°C im Umluftofen getrocknet, und anschließend zurückgewogen.

### 1. Herstellung eines nicht erfindungsgemäßen Wasserbasislacks 1

Die in den Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1**

| Komponente | Gewichtsteile |
|---|---|
| **Wässrige Phase** | |
| 3%ige Na-Mg-Schichtsilikatlösung | 22 |
| Deionisiertes Wasser | 22,4 |
| Butylglykol | 0,8 |
| Polyurethanmodifiziertes Polyacrylat; hergestellt gemäß S. 7, Z. 55 bis S.8, Z. 23 der DE 4437535 A1 | 3 |
| 50 Gew.-%ige Lösung Rheovis® PU 1250 (BASF) Rheologiemittel | 0,2 |
| 3 Gew.%ige wässrige Rheovis® AS S130 Lösung; Rheologiemittel, erhältlich von BASF, in Wasser | 3 |
| TMDD (BASF) | 1,7 |
| Melaminformaldehydharz (Luwipal 052 von der BASF SE) | 5,7 |
| 10%iges Dimethylethanolamin in Wasser | 1,1 |
| Pfropfmischpolymerisat auf Polyurethanbasis; hergestellt analog DE 19948004 - B4 (Seite 27, Beispiel 2), Festkörpergehalt mit Wasser auf 32,5 Gew.-% eingestellt | 22 |
| Isopar® L von der Exxon Mobile | 2 |
| Pluriol® P 900 der Firma BASF SE | 0,8 |
| Blaupaste | 0,1 |

| **Organische Phase (Pigmentpaste)** | |
|---|---|
| Aluminiumpigment, erhältlich von Firma Altana-Eckart | 5,6 |
| Butylglykol | 6,6 |
| Polyester; hergestellt gemäß Beispiel D, Spalte 16, Z. 37-59 der DE-A-4009858 | 3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### 2. Herstellung eines nicht erfindungsgemäßen Wasserbasislacks 2

Der Wasserbasislack 2 wurde analog Tabelle A hergestellt, wobei allerdings die 3 Teile (Gewichtsteile) Polyester; hergestellt gemäß Beispiel D, Spalte 16, Z. 37-59 der DE-A-4009858 nicht in der organischen Phase (der Pigmentpaste), sondern in der wässrigen Phase eingesetzt wurden. Des Weiteren wurden lediglich 16,5 Teile der Dispersion des Pfropfmischpolymerisats auf Polyurethanbasis; hergestellt analog DE 19948004 - B4 (Seite 27, Beispiel 2) in der wässrigen Phase eingesetzt. Weitere 5,5 Teile wurden in der organischen Phase zum Anschlämmen der Aluminiumpigmente eingesetzt.

### 3. Herstellung eines nicht erfindungsgemäßen Wasserbasislacks 3

Der Wasserbasislack 3 wurde analog Tabelle A hergestellt, wobei allerdings statt der Dispersion des Pfropfmischpolymerisats auf Polyurethanbasis; hergestellt analog DE 19948004 - B4 (Seite 27, Beispiel 2) die unter A) beschriebene Dispersion eines Mischpolymerisats (MP) eingesetzt wurde.

### 4. Herstellung eines Wasserbasislacks E1 unter Einsatz einer erfindungsgemäßen Pigmentpaste

Der Wasserbasislack E1 wurde analog dem Wasserbasislack 3 hergestellt, wobei allerdings die 3 Teile (Gewichtsteile) Polyester; hergestellt gemäß Beispiel D, Spalte 16, Z. 37-59 der DE-A-4009858 nicht in der organischen Phase (der Pigmentpaste), sondern in der wässrigen Phase eingesetzt wurden. Des Weiteren wurden lediglich 16,5 Teile der unter A) beschriebene Dispersion eines Mischpolymerisats (MP) in der wässrigen Phase eingesetzt. Weitere 5,5 Teile wurden in der organischen Phase zum Anschlämmen der Aluminiumpigmente eingesetzt (erfindungsgemäße Pigmentpaste).

### Vergleich der Wasserbasislacke 1, 2, 3 und E1

(i) Es wurden zunächst Mehrschichtlackierungen unter Einsatz der Wasserbasislacke 1, 2, 3 und E1 hergestellt.
Ein mit einem handelsüblichen Füller beschichtetes Stahlblech der Abmessungen 10 x 20 cm diente als Substrat. Auf dieses Blech wurde zunächst der jeweilige Basislack elektrostatisch und anschließend pneumatisch appliziert. Insgesamt wurde so appliziert, dass sich eine letztlich resultierende Trockenschichtdicke der Basislackschichten von 12 bis 14 Mikrometern ergab und das Verhältnis der Schichtdicke, welche durch die elektrostatische Applikation erreicht wurde, zu der Schichtdicke, die durch die pneumatische Applikation erreicht wurde, bei 70:30 lag. Nach 1 min Ablüften des Basislacks bei Raumtemperatur wurde der Basislack über 10 min bei 70 °C im Umluftofen zwischengetrocknet. Auf die zwischengetrocknete Wasserbasislackschicht wurde ein üblicher Zweikomponentenklarlack in einer Schichtdicke von 35-45 Mikrometern pneumatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet.
Die so erhaltenen Mehrschichtlackierungen wurden bezüglich ihres Farbtons mittels eines X-Rite Messgeräts unter verschiedenen Reflexionswinkeln vermessen (Farbton spezifiziert anhand des CIELAB Farbraumes, das heißt L, a, b Werte), wobei der Wasserbasislack 1 als Referenz verwendet wurde. Tabelle 1 zeigt die gemessenen L, a, b Werte.

**Tabelle 1**

| | | **Wasserbasislack 1** | **Wasserbasislack 2** | **Wasserbasislack 3** | **Wasserbasislack E1** |
|---|---|---|---|---|---|
| dL | 15° | 0 | -0,21 | 0,93 | 1,11 |
| | 25° | 0 | -0,07 | 0,12 | 0,55 |
| | 45° | 0 | 0,35 | -0,53 | -0,52 |
| | 75° | 0 | 0,61 | -0,30 | -0,37 |
| | 110° | 0 | 0,73 | -0,25 | -0,30 |
| da | 15° | 0 | -0,07 | -0,02 | 0,10 |
| | 25° | 0 | -0,09 | 0,00 | 0,05 |
| | 45° | 0 | 0,03 | 0,00 | 0,06 |
| | 75° | 0 | 0,10 | 0,01 | 0,04 |
| | 110° | 0 | -0,05 | -0,01 | 0,03 |
| db | 15° | 0 | 0,06 | 0,08 | 0,01 |
| | 25° | 0 | -0,09 | 0,00 | 0,07 |
| | 45° | 0 | -0,03 | -0,03 | -0,05 |
| | 75° | 0 | -0,07 | -0,07 | 0,09 |
| | 110° | 0 | -0,13 | -0,02 | 0,10 |

(ii) Ferner wurden weitere Mehrschichtlackierungen unter Einsatz der Wasserbasislacke 1, 2, 3 und E1 hergestellt. Ein mit einer handelsüblichen Füllerlackierung beschichtetes Stahlblech der Abmessungen 30 cm x 50 cm wurde an einer Längskante mit einem Klebestreifen versehen, um nach der Beschichtung die Schichtdickendifferenzen ermitteln zu können. Der jeweilige Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C zwischengetrocknet. Auf die zwischengetrocknete Wasserbasislackschicht wurde ein üblicher Zweikomponentenklarlack in einer Schichtdicke von 38 bis 42 Mikrometern elektrostatisch appliziert. Die resultierende Klarlackschicht wurde während 20 Minuten bei Raumtemperatur abgelüftet. Anschließend wurden Wasserbasislackschicht und Klarlackschicht in einem Umluftofen während 20 Minuten bei 140°C gemeinsam gehärtet.

Es folgte eine visuelle Auswertung der Nadelstichanzahl sowie der Nadelstichgrenze der hergestellten keilförmig aufgebrachten Mehrschichtlackierungen. Unter Nadelstichgrenze ist die Schichtdicke der Basislackschicht zu verstehen, ab welcher Nadelstiche zu erkennen sind. Tabelle 2 zeigt die entsprechenden Ergebnisse.

**Tabelle 2**

| **WBL** | **Nadelstichgrenze (Mikrometer)** | **Nadelstichanzahl** |
|---|---|---|
| 1 | 15 | 47 |
| 2 | 17 | 52 |
| 3 | 27 | 3 |
| E1 | 29 | 2 |

Alle Lackierungen (i) wiesen einen offensichtlich sehr ähnlichen visuellen Eindruck (Farbton) auf (Tabelle 1) und waren auch sonst hinsichtlich ihrer optischen Eigenschaften ähnlich. Die Ergebnisse in Tabelle 1 zeigen, dass ein Mischpolymerisat (MP) zur Herstellung von Pigmentpasten eingesetzt werden kann, wobei die Pigmentpasten dann in einem wässrigen Basislack eingesetzt werden, der das Mischpolymerisat (MP) als Hauptbindemittel enthält. Hierdurch erhält man eine größere Formulierungsfreiheit. Beispielsweise kann, wie oben gezeigt, ein Polyester in die wässrige Phase integriert werden. Genauso ist es möglich, anstelle oder zusätzlich zu dem Polyester weitere Lackkomponenten zu integrieren. Trotzdem entstehen keinerlei Nachteile für die resultierende Lackierung hinsichtlich der visuellen Eigenschaften (Tabelle 1). Im Gegenteil erhält man mit den Basislacken, die unter Einsatz des Mischpolymerisats (MP) hergestellt wurden, sogar eine deutlich verbesserte Stabilität gegen Nadelstiche (Tabelle 2).

### 5. Herstellung eines nicht erfindungsgemäßen Wasserbasislacks 4

Die in den Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B: Wasserbasislack 4**

| Komponente | Gewichtsteile |
|---|---|
| **Wässrige Phase** | |
| 3%ige Na-Mg-Schichtsilikatlösung | 27 |
| Deionisiertes Wasser | 15,9 |
| Butylglykol | 2,2 |
| Polyurethanmodifiziertes Polyacrylat; hergestellt gemäß S. 7, Z. 55 bis S.8, Z. 23 der DE 4437535 A1 | 2,4 |
| 50 Gew.-%ige Lösung Rheovis® PU 1250 (BASF) Rheologiemittel | 0,2 |
| Polyester; hergestellt gemäß Beispiel D, Spalte 16, Z. 37-59 der DE-A-4009858 | 1,2 |
| TMDD (BASF) | 1,2 |
| Melaminformaldehydharz (Luwipal 052 von der BASF SE) | 4,7 |
| 10%iges Dimethylethanolamin in Wasser | 0,5 |
| Pfropfmischpolymerisat auf Polyurethanbasis; hergestellt analog DE 19948004 - B4 (Seite 27, Beispiel 2), Festkörpergehalt mit Wasser auf 32,5 Gew.-% eingestellt | 21,1 |
| Isopropanol | 1,4 |
| Byk-347® der Firma Altana | 0,5 |
| Pluriol® P 900 der Firma BASF SE | 0,3 |
| Tinuvin® 384-2 der Firma BASF SE | 0,6 |
| Tinuvin 123 der Firma BASF SE | 0,3 |
| Rußpaste | 4,3 |
| Blaupaste | 11,4 |
| Mica-Schlämme | 3,9 |

| **Organische Phase (Pigmentpaste)** | |
|---|---|
| Aluminiumpigment, erhältlich von Firma Altana-Eckart | 0,3 |
| Butylglykol | 0,3 |
| Polyester; hergestellt gemäß Beispiel D, Spalte 16, Z. 37-59 der DE-A-4009858 | 0,3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Mica-Schlämme:

Die Mica-Schlämme wurde durch Vermischen mittels eines Rührorgans von 1,3 Gewichtsteilen Polyester; hergestellt gemäß Beispiel D, Spalte 16, Z. 37-59 der DE-A-4009858, 1,3 Gewichtsteilen Butylglykol und 1,3 Gewichtsteilen der handelsüblichen Mica Mearlin Ext. Fine Violet 539V der Firma Merck erhalten.

### 6. Herstellung eines nicht erfindungsgemäßen Wasserbasislacks 5

Der Wasserbasislack 5 wurde analog dem Wasserbasislack 4 hergestellt, wobei allerdings 2,8 Teile statt 1,2 Teilen des Polyesters; hergestellt gemäß Beispiel D, Spalte 16, Z. 37-59 der DE-A-4009858 in der wässrigen Phase eingesetzt wurden. Die organische Phase (eine Pigmentpaste) wurde dementsprechend mit 0,3 Gewichtsteilen des Pfropfmischpolymerisats auf Polyurethanbasis; hergestellt analog DE 19948004 - B4 (Seite 27, Beispiel 2), Festkörpergehalt mit Wasser auf 32,5 Gew.-% eingestellt, hergestellt. Des Weiteren wurden die Mica-Schlämme durch Vermischen mittels eines Rührorgans von 1,5 Gew.-Teilen des Pfropfmischpolymerisats auf Polyurethanbasis; hergestellt analog DE 19948004 - B4 (Seite 27, Beispiel 2), Festkörpergehalt mit Wasser auf 32,5 Gew.-% eingestellt, und 1,3 Gew.-Teilen Mica Mearlin Ext. Fine Violet 539V der Firma Merck erhalten. In der wässrigen Phase wurden entsprechend nur 19,3 Gew.-Teile des Pfropfmischpolymerisats auf Polyurethanbasis; hergestellt analog DE 19948004 - B4 (Seite 27, Beispiel 2), Festkörpergehalt mit Wasser auf 32,5 Gew.-% eingestellt, eingesetzt. Zudem wurden der wässrigen Phase anstelle von nur 2,2 Gew.-Teilen insgesamt 3,5 Gew.-Teile Butylglykol beigegeben.

### 7. Herstellung eines nicht erfindungsgemäßen Wasserbasislacks 6

Der Wasserbasislack 6 wurde analog Tabelle B hergestellt, wobei allerdings statt der Dispersion des Pfropfmischpolymerisats auf Polyurethanbasis; hergestellt analog DE 19948004 - B4 (Seite 27, Beispiel 2) die unter A) beschriebene Dispersion eines Mischpolymerisats (MP) eingesetzt wurde.

### 8. Herstellung eines Wasserbasislacks E2 unter Einsatz einer erfindungsgemäßen Pigmentpaste

Der Wasserbasislack E2 wurde analog dem Wasserbasislack 6 hergestellt, wobei allerdings 2,8 Teile statt 1,2 Teilen des Polyesters; hergestellt gemäß Beispiel D, Spalte 16, Z. 37-59 der DE-A-4009858 in der wässrigen Phase eingesetzt wurden. Die organische Phase (eine Pigmentpaste) wurde dementsprechend mit 0,3 Gewichtsteilen der unter A) beschriebenen Dispersion eines Mischpolymerisats (MP) und ohne den Polyester hergestellt (eine erste erfindungsgemäße Pigmentpaste). Des Weiteren wurden die Mica-Schlämme durch Vermischen mittels eines Rührorgans von 1,5 Gew.-Teilen der unter A) beschriebenen Dispersion eines Mischpolymerisats (MP) und 1,3 Gew.-Teilen Mica Mearlin Ext. Fine Violet 539V der Firma Merck erhalten (eine zweite erfindungsgemäße Pigmentpaste). In der wässrigen Phase wurden entsprechend nur 19,3 Gew.-Teile der unter A) beschriebenen Dispersion eines Mischpolymerisats (MP) eingesetzt. Zudem wurden der wässrigen Phase anstelle von nur 2,2 Gew.-Teilen insgesamt 3,5 Gew.-Teile Butylglykol beigegeben.

### Vergleich der Wasserbasislacke 4, 5, 6 und E2

Analog der Herstellung und Untersuchung der Mehrschichtlackierungen, die unter Einsatz der Wasserbasislacke 1, 2, 3 und E1 hergestellt wurden, wurden Mehrschichtlackierungen unter Einsatz der Wasserbasislacke 4, 5, 6 und E2 hergestellt und untersucht. Die Ergebnisse finden sich in Tabelle 3 (Mehrschichtlackierungen (i), wobei die Mehrschichtlackierung mit Wasserbasislack 4 als Referenz verwendet wurde) und Tabelle 4 (Mehrschichtlackierungen (ii)).

**Tabelle 3**

| | | **Wasserbasislack 4** | **Wasserbasislack 5** | **Wasserbasislack 6** | **Wasserbasislack E2** |
|---|---|---|---|---|---|
| dL | 15° | 0 | -0,38 | -0,77 | 0,66 |
| | 25° | 0 | -0,24 | -1,57 | -0,66 |
| | 45° | 0 | 0,12 | -0,89 | -0,55 |
| | 75° | 0 | 0,35 | -0,34 | -0,18 |
| | 110° | 0 | 0,47 | -0,20 | -0,21 |
| da | 15° | 0 | -0,39 | -0,51 | -1,33 |
| | 25° | 0 | -0,21 | -0,22 | -0,21 |
| | 45° | 0 | 0,12 | -0,46 | -0,04 |
| | 75° | 0 | 0,08 | -0,04 | -0,02 |
| | 110° | 0 | 0,21 | 0,08 | 0,01 |
| db | 15° | 0 | 0,24 | 0,73 | 0,30 |
| | 25° | 0 | 0,12 | 1,24 | 0,06 |
| | 45° | 0 | 0,02 | 1,80 | 0,16 |
| | 75° | 0 | 0,13 | 0,76 | -0,24 |
| | 110° | 0 | 0,27 | 0,20 | -0,34 |

**Tabelle 4**

| **WBL** | **Nadelstichgrenze (Mikrometer)** | **Nadelstichanzahl** |
|---|---|---|
| 4 | 15 | 24 |
| 5 | 17 | 37 |
| 6 | 25 | 7 |
| E2 | 31 | 3 |

Wiederum wiesen alle Lackierungen (i) einen offensichtlich sehr ähnlichen visuellen Eindruck (Farbton) auf (Tabelle 3) und waren auch sonst hinsichtlich ihrer optischen Eigenschaften ähnlich. Gleichzeitig weisen aber die Mehrschichtlackierungen, die unter Einsatz des Mischpolymerisats (MP) hergestellt wurden, eine deutlich verbesserte Nadelstichgrenze auf (Mehrschichtlackierungen (ii), Tabelle 4). Demzufolge können durch den Einsatz von erfindungsgemäßen Pigmentpasten (siehe Mehrschichtlackierung mit Wasserbasislack E2) hervorragende anwendungstechnische Eigenschaften mit einer hohen Formulierungsfreiheit verbunden werden.

## Patentansprüche

1. Pigmentpaste enthaltend
mindestens eine wässrige Dispersion, enthaltend
mindestens ein Mischpolymerisat (MP), wobei das Mischpolymerisat (MP) herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
wobei
(a) ein wasserlöslicher Initiator verwendet wird,
(b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
(c) die Mischung der olefinisch ungesättigten Monomere mindestens ein mehrfach olefinisch ungesättigtes Monomer enthält,
sowie
mindestens ein Pigment (P),
wobei das Gewichtsverhältnis des mindestens einen Pigments zu dem mindestens einen Mischpolymerisat (MP) größer 1,5 ist.

2. Pigmentpaste gemäß Anspruch 1, **dadurch gekennzeichnet, dass** bei der Herstellung des Mischpolymerisats (MP) die Zudosierung der olefinisch ungesättigten Monomere so erfolgt, dass in der Reaktionslösung eine Konzentration von 4,0 Gew.-%, bezogen auf die Gesamtmenge an olefinisch ungesättigten Monomeren, während der gesamten Reaktionsdauer nicht überschritten wird.

3. Pigmentpaste nach Anspruch 1 oder 2, **dadurch gekennzeichnet, dass** bei der Herstellung des Mischpolymerisats (MP) die Mischung der olefinisch ungesättigten Monomere 0,1 bis 6,0 mol-% mehrfach olefinisch ungesättigtes Monomere enthält.

4. Pigmentpaste nach einem der Ansprüche 1 bis 3, **dadurch gekennzeichnet, dass** bei der Herstellung des Mischpolymerisats (MP) die Mischung der olefinisch ungesättigten Monomere 0,1 bis 2,0 mol-% mehrfach olefinisch ungesättigtes Monomere enthält.

5. Pigmentpaste nach einem der Ansprüche 1 bis 4, **dadurch gekennzeichnet, dass** bei der Herstellung des Mischpolymerisats (MP) die Mischung der olefinisch ungesättigten Monomere 0,1 bis 6,0 mol-% Allylmethacrylat enthält und keine weiteren mehrfach olefinisch ungesättigten Monomere enthalten sind.

6. Pigmentpaste nach einem der Ansprüche 1 bis 5, **dadurch gekennzeichnet, dass** bei der Herstellung des Mischpolymerisats (MP) die Mischung von olefinisch ungesättigten Monomeren weniger als 10,0 Gew.-% vinylaromatische Monomere, bezogen auf die Gesamtmenge an olefinisch ungesättigten Monomeren enthält.

7. Pigmentpaste nach einem der Ansprüche 1 bis 6, **dadurch gekennzeichnet, dass** bei der Herstellung des Mischpolymerisats (MP) die Mischung von olefinisch ungesättigten Monomeren keine vinylaromatischen Monomere enthält.

8. Pigmentpaste nach einem der Ansprüche 1 bis 7, **dadurch gekennzeichnet, dass** das Gewichtsverhältnis des mindestens einen Pigments zu dem mindestens einen Mischpolymerisat (MP) größer 2,0 ist.

9. Pigmentpaste nach einem der Ansprüche 1 bis 8, **dadurch gekennzeichnet, dass** das Gewichtsverhältnis des mindestens einen Pigments zu dem mindestens einen Mischpolymerisat (MP) größer 2,5 ist.

10. Pigmentpaste nach einem der Ansprüche 1 bis 9, **dadurch gekennzeichnet, dass** das Gewichtsverhältnis des mindestens einen Pigments zu dem mindestens einen Mischpolymerisat (MP) 3,0 bis 5,0 ist.

11. Pigmentpaste nach einem der Ansprüche 1 bis 10, **dadurch gekennzeichnet, dass** das Pigment ein Effektpigment ist.

12. Pigmentpaste nach Anspruch 11, **dadurch gekennzeichnet, dass** das Pigment ausgewählt wird aus der Gruppe bestehend aus plättchenförmigen Aluminiumpigmenten und/oder Metalloxid-Glimmer-Pigmenten.

13. Pigmentpaste nach einem der Ansprüche 1 bis 12, **dadurch gekennzeichnet, dass** die Paste ein plättchenförmiges Aluminiumpigment und mindestens ein organisches Lösemittel enthält.

14. Pigmentpaste nach einem der Ansprüche 1-12, **dadurch gekennzeichnet, dass** die Paste ein Metalloxid-Glimmer-Pigment und weniger als 10 Gew.-% an organischen Lösemitteln enthält.

## Claims

1. Pigment paste comprising
at least one aqueous dispersion comprising
at least one copolymer (CP), said copolymer (CP) being preparable by
(i) initially charging an aqueous dispersion of at least one polyurethane, and then
(ii) polymerizing a mixture of olefinically unsaturated monomers in the presence of the polyurethane from (i),
in which
(a) a water-soluble initiator is used,
(b) the olefinically unsaturated monomers are metered in such that a concentration of 6.0% by weight, based on the total amount of olefinically unsaturated monomers used for polymerization, in the reaction solution is not exceeded over the entire reaction time, and
(c) the mixture of the olefinically unsaturated monomers comprises at least one polyolefinically unsaturated monomer,
and
at least one pigment (P),
where the weight ratio of the at least one pigment to the at least one copolymer (CP) is greater than 1.5.

2. Pigment paste according to Claim 1, **characterized in that** the metered addition of the olefinically unsaturated monomers in the preparation of the copolymer (CP) is effected such that a concentration of 4.0% by weight, based on the total amount of olefinically unsaturated monomers, is not exceeded in the reaction solution over the entire reaction time.

3. Pigment paste according to Claim 1 or 2, **characterized in that** the mixture of olefinically unsaturated monomers in the preparation of the copolymer (CP) comprises 0.1 to 6.0 mol% of polyolefinically unsaturated monomers.

4. Pigment paste according to any of Claims 1 to 3, **characterized in that** the mixture of olefinically unsaturated monomers in the preparation of the copolymer (CP) comprises 0.1 to 2.0 mol% of polyolefinically unsaturated monomers.

5. Pigment paste according to any of Claims 1 to 4, **characterized in that** the mixture of olefinically unsaturated monomers in the preparation of the copolymer (CP) comprises 0.1 to 6.0 mol% of allyl methacrylate and no further polyolefinically unsaturated monomers.

6. Pigment paste according to any of Claims 1 to 5, **characterized in that** the mixture of olefinically unsaturated monomers in the preparation of the copolymer (CP) comprises less than 10.0% by weight of vinylaromatic monomers, based on the total amount of olefinically unsaturated monomers.

7. Pigment paste according to any of Claims 1 to 6, **characterized in that** the mixture of olefinically unsaturated monomers in the preparation of the copolymer (CP) does not comprise any vinylaromatic monomers.

8. Pigment paste according to any of Claims 1 to 7, **characterized in that** the weight ratio of the at least one pigment to the at least one copolymer (CP) is greater than 2.0.

9. Pigment paste according to any of Claims 1 to 8, **characterized in that** the weight ratio of the at least one pigment to the at least one copolymer (CP) is greater than 2.5.

10. Pigment paste according to any of Claims 1 to 9, **characterized in that** the weight ratio of the at least one pigment to the at least one copolymer (CP) is 3.0 to 5.0.

11. Pigment paste according to any of Claims 1 to 10, **characterized in that** the pigment is an effect pigment.

12. Pigment paste according to Claim 11, **characterized in that** the pigment is selected from the group consisting of platelet-shaped aluminium pigments and/or metal oxide-mica pigments.

13. Pigment paste according to any of Claims 1 to 12, **characterized in that** the paste comprises a platelet-shaped aluminium pigment and at least one organic solvent.

14. Pigment paste according to any of Claims 1-12, **characterized in that** the paste comprises a metal oxide-mica pigment and less than 10% by weight of organic solvents.

## Revendications

1. Pâte de pigment, contenant :
au moins une dispersion aqueuse, contenant :
au moins un copolymère (MP), le copolymère (MP) pouvant être fabriqué par :
(i) le chargement initial d'une dispersion aqueuse d'au moins un polyuréthane, puis
(ii) la polymérisation d'un mélange de monomères oléfiniquement insaturés en présence du polyuréthane de (i),
(a) un initiateur soluble dans l'eau étant utilisé,
(b) l'ajout des monomères oléfiniquement insaturés ayant lieu de telle sorte qu'une concentration de 6,0 % en poids, par rapport à la quantité totale de monomères oléfiniquement insaturés utilisés pour la polymérisation, ne soit pas dépassée dans la solution de réaction pendant la durée totale de la réaction, et
(c) le mélange des monomères oléfiniquement insaturés contenant au moins un monomère polyoléfiniquement insaturé,
et
au moins un pigment (P),
le rapport en poids entre ledit au moins un pigment et ledit au moins un copolymère (MP) étant supérieur à 1,5.

2. Pâte de pigment selon la revendication 1, **caractérisée en ce que**, lors de la fabrication du copolymère (MP), l'ajout des monomères oléfiniquement insaturés a lieu de telle sorte qu'une concentration de 4,0 % en poids, par rapport à la quantité totale de monomères oléfiniquement insaturés, ne soit pas dépassée dans la solution de réaction pendant la durée totale de la réaction.

3. Pâte de pigment selon la revendication 1 ou 2, **caractérisée en ce que**, lors de la fabrication du copolymère (MP), le mélange des monomères oléfiniquement insaturés contient 0,1 à 6,0 % en moles de monomères polyoléfiniquement insaturés.

4. Pâte de pigment selon l'une quelconque des revendications 1 à 3, **caractérisée en ce que**, lors de la fabrication du copolymère (MP), le mélange des monomères oléfiniquement insaturés contient 0,1 à 2,0 % en moles de monomères polyoléfiniquement insaturés.

5. Pâte de pigment selon l'une quelconque des revendications 1 à 4, **caractérisée en ce que**, lors de la fabrication du copolymère (MP), le mélange des monomères oléfiniquement insaturés contient 0,1 à 6,0 % en moles de méthacrylate d'allyle, et aucun monomère polyoléfiniquement insaturé supplémentaire n'est contenu.

6. Pâte de pigment selon l'une quelconque des revendications 1 à 5, **caractérisée en ce que**, lors de la fabrication du copolymère (MP), le mélange des monomères oléfiniquement insaturés contient moins de 10,0 % en poids de monomères aromatiques de vinyle, par rapport à la quantité totale de monomères oléfiniquement insaturés.

7. Pâte de pigment selon l'une quelconque des revendications 1 à 6, **caractérisée en ce que**, lors de la fabrication du copolymère (MP), le mélange des monomères oléfiniquement insaturés ne contient pas de monomères aromatiques de vinyle.

8. Pâte de pigment selon l'une quelconque des revendications 1 à 7, **caractérisée en ce que** le rapport en poids entre ledit au moins un pigment et ledit au moins un copolymère (MP) est supérieur à 2,0.

9. Pâte de pigment selon l'une quelconque des revendications 1 à 8, **caractérisée en ce que** le rapport en poids entre ledit au moins un pigment et ledit au moins un copolymère (MP) est supérieur à 2,5.

10. Pâte de pigment selon l'une quelconque des revendications 1 à 9, **caractérisée en ce que** le rapport en poids entre ledit au moins un pigment et ledit au moins un copolymère (MP) est de 3,0 à 5,0.

11. Pâte de pigment selon l'une quelconque des revendications 1 à 10, **caractérisée en ce que** le pigment est un pigment à effet.

12. Pâte de pigment selon la revendication 11, **caractérisée en ce que** le pigment est choisi dans le groupe constitué par les pigments d'aluminium plaquettaires et/ou les pigments d'oxyde de métal-mica.

13. Pâte de pigment selon l'une quelconque des revendications 1 à 12, **caractérisée en ce que** la pâte contient un pigment d'aluminium plaquettaire et au moins un solvant organique.

14. Pâte de pigment selon l'une quelconque des revendications 1 à 12, **caractérisée en ce que** la pâte contient un pigment d'oxyde de métal-mica et moins de 10 % en poids de solvants organiques.
